# EUROPEAN PATENT APPLICATION

(11) **EP 4 116 377 A1**
(43) Date of publication of application: **11.01.2023**
(21) Application number: 20922755.2
(22) Date of filing: 05.03.2020
(51) Int. Cl.: C08L 67/02, C08K 5/521, C08K 5/00, C08K 5/3492, C08G 63/183, C08G 63/199, C08L 25/06, C08L 33/06

(54) **POLYBUTYLENE TEREPHTHALATE RESIN COMPOSITION HAVING EXCELLENT FLAME RETARDANCY AND HYDROLYSIS RESISTANCE AND MOLDED ARTICLE PRODUCED THEREFROM**

(71) Applicant: Samyang Corporation, Jongno-gu Seoul 03129 (KR)
(72) Inventor: SOHN, Yong Jei, Daejeon 35298 (KR); KIM, Tae Geon, Seongnam-si Gyeonggi-do 13597 (KR); PARK, Sang Hyun, Daejeon 34071 (KR); SON, Oh Gun, Daejeon 35248 (KR); OH, Seok Bin, Incheon 22188 (KR); JO, Chul Jin, Daejeon 35228 (KR)
(74) Representative: Schrell, Andreas
(86) International application number: PCT/KR2020/003117
(87) International publication number: WO 2021/177488

(57) **Abstract**

The present invention relates to a polybutylene terephthalate resin composition having excellent flame retardancy and hydrolysis resistance and a molded article produced therefrom and, more specifically, to a polybutylene terephthalate resin composition and a molded article produced therefrom, the polybutylene terephthalate resin composition having hydrolysis resistance and heat resistance that are improved by melt-processing a polybutylene terephthalate resin by using polycyclohexylenedimethylene terephthalate resin, and simultaneously having flame retardancy and impact resistance that are improved by using a phosphorus-based flame retardant and a compatibilizer.

## Description

### [TECHNICAL FIELD]

The present invention relates to a polybutylene terephthalate resin composition having excellent flame retardancy and hydrolysis resistance, and a molded article prepared therefrom, and more specifically, to a polybutylene terephthalate resin composition having improved hydrolysis resistance and heat resistance by melt processing of polybutylene terephthalate resin with polycyclohexylenedimethylene terephthalate resin, and at the same time, improved flame retardancy and impact properties by using a phosphorus-based flame retardant and a compatibilizer, and a molded article prepared therefrom.

### [BACKGROUND ART]

As the sales of electric vehicles are in full swing, there is a need for materials that are differentiated from existing materials. Electrical and electronic components for electric vehicles include numerous connectors and charging-related components which require basic electrical characteristics and flame retardancy.

Polybutylene terephthalate (PBT) resin is attracting attention as a material for electrical products or electronic products in that it has excellent physical properties and good moldability, and particularly shows excellent electrical properties. However, polybutylene terephthalate (PBT) resin has disadvantages in that it is vulnerable to heat and hydrolysis.

Therefore, there is a need for the development of a polybutylene terephthalate resin composition having excellent hydrolysis resistance and heat resistance while securing physical properties such as physical strength and electrical properties that can be suitably used as a material for a product.

### [CONTENTS OF THE INVENTION]

### [PROBLEMS TO BE SOLVED]

The purpose of the present invention is to provide a polybutylene terephthalate resin composition having improved hydrolysis resistance and heat resistance by melt processing of polybutylene terephthalate resin with polycyclohexylenedimethylene terephthalate resin, and at the same time, improved flame retardancy and impact properties by using a phosphorus-based flame retardant and a compatibilizer, and a molded article prepared therefrom.

### [TECHNICAL MEANS]

In order to achieve the technical purpose, the present invention provides a polybutylene terephthalate resin composition comprising: (1) 40 to 70 parts by weight of polybutylene terephthalate resin; (2) 10 to 40 parts by weight of polycyclohexylenedimethylene terephthalate resin; (3) 12 to 25 parts by weight of a phosphorus-based flame retardant; (4) 0.1 to 3 parts by weight of a flame retardant supplement; and (5) 0.1 to 2 parts by weight of a compatibilizer, based on 100 parts by weight of the total composition.

In another aspect, the present invention provides a molded article prepared from the above polybutylene terephthalate resin composition.

### [EFFECT OF THE INVENTION]

The polybutylene terephthalate resin composition of the present invention can improve hydrolysis resistance and heat resistance by melt processing of polybutylene terephthalate with polycyclohexylenedimethylene terephthalate resin, can have a flame retardant property by using a phosphorus-based flame retardant according to the need for eco-friendly materials, and can have improved impact property and excellent processing stability by including the compatibilizer. The molded article made of the polybutylene terephthalate resin composition of the present invention can be particularly suitably used-for example, in the production of electrical or electronic parts for electric vehicles.

### [CONCRETE MODE FOR CARRYING OUT THE INVENTION]

The present invention is explained in more detail below.

The polybutylene terephthalate resin composition of the present invention comprises (1) 40 to 70 parts by weight of polybutylene terephthalate resin; (2) 10 to 40 parts by weight of polycyclohexylenedimethylene terephthalate resin; (3) 12 to 25 parts by weight of a phosphorus-based flame retardant; (4) 0.1 to 3 parts by weight of a flame retardant supplement; and (5) 0.1 to 2 parts by weight of a compatibilizer, based on 100 parts by weight of the total composition. In addition, the polybutylene terephthalate resin composition of the present invention may further comprise one or more additives.

### (1) Polybutylene terephthalate (PBT) resin

The polybutylene terephthalate resin comprised in the polybutylene terephthalate resin composition of the present invention is a polymer obtained by polycondensation of butane-1,4-diol and terephthalic acid or dimethyl terephthalate as monomers through direct esterification or transesterification.

In a preferred embodiment of the present invention, the melting temperature of the polybutylene terephthalate resin may be 215 to 235°C, more preferably 220 to 230°C. In addition, the intrinsic viscosity (IV) may be 0.7 to 1.5 dl/g, preferably 0.7 to 1.3 dl/g.

The polybutylene terephthalate resin composition of the present invention comprises 40 to 70 parts by weight of the polybutylene terephthalate resin based on 100 parts by weight of the total composition. If the content of the polybutylene terephthalate resin in the total 100 parts by weight of the composition is less than 40 parts by weight, processability, moldability and physical properties may be poor, and if the content exceeds 70 parts by weight, flame retardancy and hydrolysis resistance may be poor.

More specifically, the content of the polybutylene terephthalate resin in the resin composition based on 100 parts by weight of the total polybutylene terephthalate resin composition of the present invention may be 40 parts by weight or more, 42 parts by weight or more, 43 parts by weight or more, 44 parts by weight or more or 45 parts by weight or more, and may be 70 parts by weight or less, 68 parts by weight or less, 66 parts by weight or less, 65 parts by weight or less, 62 parts by weight or less or 60 parts by weight or less. Preferably, the content of the polybutylene terephthalate resin in 100 parts by weight of the composition may be, for example, 40 to 70 parts by weight, more preferably 42 to 65 parts by weight, even more preferably 50 to 65 parts by weight.

### (2) Polycyclohexylenedimethylene terephthalate (PCT) resin

The polycyclohexylenedimethylene terephthalate resin comprised in the polybutylene terephthalate resin composition of the present invention may have a trans content of 65 to 92 mol%.

Polycyclohexylenedimethylene terephthalate (hereinafter referred to as "PCT") is a semi-crystalline and saturated thermoplastic polyester. PCT has superior mechanical properties and a higher melting point than polyethylene terephthalate (PET). Although the crystallization rate of PCT is slower than that of poly(butylene terephthalate) (PBT), it is significantly faster than that of polyethylene terephthalate (PET), and PCT has high heat resistance and is relatively price competitive. Therefore, the potential use is very high. In addition, PCT is a polymer with the highest melting point among existing polyester polymers (except for liquid crystal polymers), and is known to have low water absorption compared to polyamide (PA)-based polymers and excellent heat discoloration resistance.

Cyclohexanedimethanol (1,4-cyclohexanedimethanol; hereinafter referred to as "CHDM"), one of the core raw materials of PCT resin, is produced only by Eastman Chemical in the USA. Cyclohexanedimethanol (CHDM) has cis and trans isomers, and when a PCT resin is polycondensed using CHDM having such an isomer ratio as a raw material, the melting point of the PCT resin is known to be about 280°C or higher.

The higher the trans isomer ratio among the isomer of CHDM used for PCT resin polymerization, the higher the melting point of the PCT resin. After synthesizing CHDM having a high trans ratio through the CHDM isomerization reaction and polymerizing a PCT resin using the same, it is possible to prepare a high heat-resistant PCT resin having a melting point of more than 290°C.

In a preferred embodiment of the present invention, the melting temperature of the polybutylene terephthalate resin may be 280°C or higher, and the intrinsic viscosity (IV) may be 0.6 to 0.9 dl/g, preferably 0.7 to 0.8 dl/g.

The polybutylene terephthalate resin composition of the present invention comprises 10 to 40 parts by weight of the polycyclohexylenedimethylene terephthalate resin based on 100 parts by weight of the total composition. If the content of the polycyclohexylenedimethylene terephthalate resin in the total 100 parts by weight of the composition is less than 15 parts by weight, hydrolysis resistance is lowered and heat resistance properties such as heat deformation temperature may be poor. If the content exceeds 40 parts by weight, overall physical properties may deteriorate due to a decrease in meltability through resin mixing, and a problem may occur wherein product cost increases.

More specifically, the content of the polycyclohexylenedimethylene terephthalate resin in the resin composition based on 100 parts by weight of the total polybutylene terephthalate resin composition of the present invention may be 10 parts by weight or more, 13 parts by weight or more, 15 parts by weight or more, 20 parts by weight or more, or 25 parts by weight or more, and may be 40 parts by weight or less, 36 parts by weight or less, 33 parts by weight or less or 30 parts by weight or less. Preferably, the content of the polycyclohexylenedimethylene terephthalate resin in 100 parts by weight of the composition may be, for example, 10 to 40 parts by weight, more preferably 15 to 35 parts by weight, even more preferably 20 to 30 parts by weight.

### (3) Phosphorus-based flame retardant

The resin composition of the present invention also comprises a phosphorus-based flame retardant.

Non-limiting examples of the phosphorus-based flame retardant that can be used in the resin composition of the present invention include a phosphoric acid ester compound, and more specifically, a phosphoric acid ester compound represented by the following Formula 1:

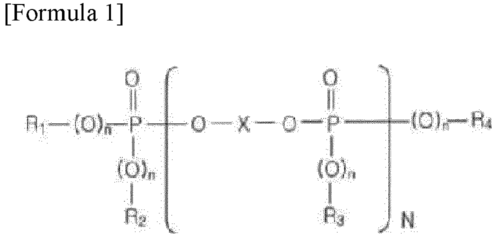

In Formula 1, each of R₁, R₂, R₃ and R₄ is independently C₁-C₈ alkyl, C₅-C₆ cycloalkyl, C₆-C₂₀ aryl or C₇-C₂₀ aralkyl. Particularly preferred aryl groups are cresyl, phenyl, xylenyl, propylphenyl or butylphenyl. n may be independently 0 or 1, preferably 1. N is 0 to 10, preferably 0.3-8, more preferably 0.5-5. X is a C₆-C₃₀ mononuclear aromatic or polynuclear aromatic group, preferably diphenylphenol, bisphenol A, resorcinol or hydroquinone.

The phosphoric acid ester compound is preferably a phosphoric acid ester compound represented by the following Formula (2):

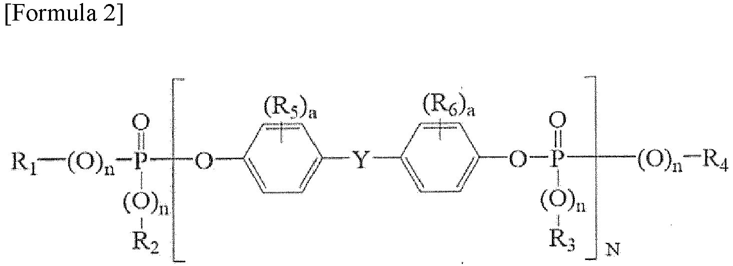

In Formula 2, R₁, R₂, R₃, R₄, n and N are as defined in Formula 1 above, each of R₅ and R₆ is independently a hydrogen atom or C₁-C₄ alkyl, and Y represents C₁-C₇ alkylidene, C₁-C₇ alkylene, C₅-C₁₂ cycloalkylene, C₅-C₁₂ cycloalkylidene, -O-, -S-, -SO-, -SO₂- or -CO-, and a represents the integer of 0 to 2. Preferably, Y is C₁-C₇ alkylidene, more preferably isopropylidene or methylene.

The phosphoric acid ester compound usable as the phosphorus-based flame retardant in the present invention may be a monophosphate (N=0), an oligophosphate (N=1 to 10), or a mixture of monophosphate and oligophosphate.

In one embodiment, the phosphorus-based flame retardant may be at least one selected from resorcinol bis(diphenyl phosphate), bisphenol A bis(diphenyl phosphate) or N,N'-bis[di-(2,6-xylyl)phosphoryl]-piperazine.

The polybutylene terephthalate resin composition of the present invention comprises 12 to 25 parts by weight of the phosphorus-based flame retardant based on 100 parts by weight of the total composition. If the content of the phosphorus-based flame retardant in the total 100 parts by weight of the composition is less than 12 parts by weight, the flame retardancy may be poor, and if the content exceeds 25 parts by weight, the processability and physical properties may be greatly deteriorated.

More specifically, the content of the phosphorus-based flame retardant in the resin composition based on 100 parts by weight of the total polybutylene terephthalate resin composition of the present invention may be 12 parts by weight or more, 13 parts by weight or more, 14 parts by weight or more or 15 parts by weight or more, and may be 25 parts by weight or less, 23 parts by weight or less, 21 parts by weight or less or 20 parts by weight or less. Preferably, the content of the phosphorus-based flame retardant in 100 parts by weight of the composition may be, for example, 12 to 25 parts by weight, more preferably 13 to 22 parts by weight, even more preferably 15 to 20 parts by weight.

### (4) Flame retardant supplement

The flame retardant supplement comprised in the resin composition of the present invention may be a nitrogen-based flame retardant supplement.

The flame retardant supplement may be at least one compound selected from the group consisting of melamine cyanurate, melamine phosphate, melamine polyphosphate and melamine pyrophosphate, and preferably melamine polyphosphate.

The polybutylene terephthalate resin composition of the present invention comprises 0.1 to 3 parts by weight of the flame retardant supplement based on 100 parts by weight of the total composition. If the content of the flame retardant supplement in the 100 parts by weight of the total composition is less than 0.1 parts by weight, the flame retardancy may be poor, and if the content exceeds 3 parts by weight, processability and physical properties may be greatly reduced.

More specifically, the content of the flame retardant supplement in the resin composition based on 100 parts by weight of the total polybutylene terephthalate resin composition of the present invention may be 0.1 parts by weight or more, 0.3 parts by weight or more, 0.5 parts by weight or more or 0.8 parts by weight or more, and may be 3 parts by weight or less, 2.5 parts by weight or less, 2 parts by weight or less or 1.5 parts by weight or less. Preferably, the content of the flame retardant supplement in 100 parts by weight of the composition may be, for example, 0.1 to 3 parts by weight, more preferably 0.5 to 2 parts by weight, even more preferably 0.8 to 1.5 parts by weight.

### (5) Compatibilizer

The polybutylene terephthalate resin composition of the present invention may comprise a compatibilizer. The compatibilizer is not particularly limited, but a copolymer of styrene and glycidyl methacrylate may be used, and preferably a random copolymer of styrene and glycidyl methacrylate having a glycidyl methacrylate content of 15 to 30% by weight may be used.

The polybutylene terephthalate resin composition of the present invention comprises 0.1 to 2 parts by weight of the compatibilizer based on 100 parts by weight of the total composition. If the content of the compatibilizer in the total 100 parts by weight of the composition is less than 0.1 parts by weight, the physical property retention after the heat- and moisture- resistance tests may be reduced, and if the content exceeds 2 parts by weight, it is difficult to obtain additional effects.

More specifically, the content of the compatibilizer in the resin composition based on 100 parts by weight of the total polybutylene terephthalate resin composition of the present invention may be 0.1 parts by weight or more, 0.3 parts by weight or more, 0.5 parts by weight or more or 0.8 parts by weight or more, and may be 2 parts by weight or less, 1.8 parts by weight or less, 1.6 parts by weight or less or 1.5 parts by weight or less. Preferably, the content of the compatibilizer in 100 parts by weight of the composition may be, for example, 0.1 to 2 parts by weight, more preferably 0.5 to 1.8 parts by weight, and even more preferably 0.8 to 1.5 parts by weight.

### (6) Other additives

Within the range that does not substantially impair the object of the present invention, the resin composition of the present invention may comprise, in addition to the above-mentioned components (1) to (5), additive components commonly used in the art, such as a releasing agent, a heat stabilizer, an antioxidant, a lubricant, a pigment, a light stabilizer, a black master batch etc., alone or in combination. Examples include phosphite-based and thioester-based antioxidants and stearate-based or fatty acid-based lubricants or inorganic activators such as aluminum hydrate, magnesium hydrate, zinc borate, zinc borate hydrate and magnesium sulfate hydrate used for polyester flame retardancy.

The other additive component may be used in an amount of 0.05 to 1 part by weight based on 100 parts by weight of the resin composition, but it is not limited thereto.

The polybutylene terephthalate resin composition of the present invention can improve hydrolysis resistance and heat resistance by melt processing of polybutylene terephthalate with polycyclohexylenedimethylene terephthalate resin, can have a flame retardant property by using a phosphorus-based flame retardant according to the need for eco-friendly materials, and can have improved impact property and excellent processing stability by including the compatibilizer. The polybutylene terephthalate resin composition of the present invention can be used particularly suitably for the production of molded articles, such as electrical or electronic components for electric vehicles.

Therefore, in another aspect, the present invention provides a molded article prepared from the above polybutylene terephthalate resin composition.

The molded article may be prepared by extruding or injection molding the polybutylene terephthalate resin composition.

According to one embodiment, the molded article may be an electrical or electronic product, but it is not limited thereto.

The present invention is explained in more detail through the following Examples and Comparative Examples. However, the scope of the present invention is not limited thereby in any manner.

### [EXAMPLES]

### Components used in Examples and Comparative Examples

(A) Polybutylene terephthalate (PBT): polybutylene terephthalate having an intrinsic viscosity (IV) of 0.8 to 1.1 dl/g
(B) polycyclohexylenedimethylene terephthalate (PCT): polycyclohexylenedimethylene terephthalate having a melting point of 280°C or higher and an intrinsic viscosity of 0.75 dl/g (manufacturer: SKC, SKYPURA 3502)
(C) Phosphorus-based flame retardant: metal phosphinate (manufacturer: Clariant, Exolit OP1240)
(D) Flame retardant supplement: melamine polyphosphate (manufacturer: BASF, Melapur 200)
(E) Compatibilizer: copolymer of styrene and glycidyl methacrylate (manufacturer: AddiCo, Addico 9302)

### Examples 1 to 3 and Comparative Examples 1 to 6

According to the compositions and contents of Table 1 below, the components were mixed with a tumbler mixer for 10 minutes, added to a twin screw-type extruder and melted and extruded at a cylinder temperature of 250°C and a stirring speed of 250 rpm to prepare pellets. The prepared pellets were dried at 80°C for 4 hours or more, and then injected in an injection machine at 250°C (manufacturer: LG Cable & System Ltd., product name: LGH-200N) to prepare specimens. The physical properties of the prepared specimens were evaluated by the following method, and the results are shown in Table 1 below.

### <Method of measuring physical properties>

(1) IZOD impact strength (unit: kgf·cm/cm): Based on the evaluation method specified in ASTM D256, a notch was made in 1/8" thick Izod specimen and evaluated.
(2) Tensile strength (unit: kgf/cm²): It was measured under the conditions of 50 mm/min according to the evaluation method specified in ASTM D638.
(3) Flexural strength and flexural modulus (unit: kgf/cm²): It was measured under the condition of 2.8 mm/min according to the evaluation method specified in ASTM D790.
(4) Flame retardancy: It was measured by the UL94 V test method using a specimen having a thickness of 0.8 mm.
(5) Hydrolysis resistance: Distilled water was put in a PCT (Pressure Cook Test) equipment capable of being pressurized, and treated for 144 hours while maintaining 120°C, 2 atm and 100% RH After the test, the degree of deterioration of the physical properties compared to the initial physical properties was calculated. (⊚: very good, △: average, X: poor).

**[Table 1]**

| | | | Examples | | | Comparative Examples | | | | | |
|---|---|---|---|---|---|---|---|---|---|---|---|
| | | | 1 | 2 | 3 | 1 | 2 | 3 | 4 | 5 | 6 |
| Compositio n (parts by weight) | (A) | | 56 | 58.1 | 48 | 99 | 80 | 72 | 61.6 | 56.7 | 54.6 |
| | (B) | | 24 | 24.9 | 32 | - | - | 8 | 26.4 | 24.3 | 23.4 |
| | (C) | | 18 | 15 | 18 | - | 18 | 18 | 10 | 18 | 18 |
| | (D) | | 1 | 1 | 1 | - | 1 | 1 | 1 | 1 | 1 |
| | (E) | | 1 | 1 | 1 | 1 | 1 | 1 | 1 | - | 3 |
| Properties | Impact strengt h | Before PCT | 2.44 | 2.53 | 2.40 | 4.2 | 2.65 | 2.13 | 2.58 | 2.38 | 2.45 |
| | | After PCT | 1.95 | 2.01 | 2.03 | 1.42 | 1.17 | 1.46 | 2.11 | 1.82 | 1.96 |
| | Tensile strengt h | Before PCT | 454 | 470 | 435 | 555 | 345 | 352 | 466 | 447 | 458 |
| | | After PCT | 421 | 437 | 403 | 406 | 255 | 278 | 433 | 389 | 423 |
| | Flexural strength | | 554 | 589 | 544 | 753 | 519 | 535 | 542 | 551 | 560 |
| | Flexural modulus | | 22263 | 2313 7 | 2118 0 | 2063 0 | 2123 7 | 2204 4 | 2208 9 | 2223 2 | 2235 9 |
| | Flame retardancy (UL94,1.5mm) | | V-0 | V-1 | V-0 | HB | V-0 | V-0 | HB | V-0 | V-0 |
| | Hydrolysis resistance | | ⊚ | ⊚ | ⊚ | X | X | △ | ⊚ | ⊚ | ⊚ |

As shown in Table 1 above, the polybutylene terephthalate resin compositions of Examples 1 to 3 according to the present invention have excellent mechanical properties, and significantly less deterioration in mechanical properties after flame retardancy and heat- and moisture- resistance tests. Therefore, it can be seen that they can be particularly suitably used for the manufacturing of electronic components.

On the other hand, the compositions of the Comparative Examples were inferior to at least one of the above evaluation items. It can be seen that in Comparative Examples 1 and 2, in which the polycyclohexylenedimethylene terephthalate resin and the phosphorus-based flame retardant are not included, the flame retardancy and hydrolysis resistance are poor. In Comparative Example 3, in which polycyclohexylenedimethylene terephthalate was not sufficiently included, physical properties were deteriorated due to hydrolysis after the heat- and moisture- resistance tests, and Comparative Example 4 in which the phosphorus-based flame retardant was not sufficiently comprised showed a decrease in flame retardancy. It can be seen that in Comparative Example 5 in which the compatibilizer is not comprised, the physical property retention after the heat- and moisture- resistance tests is lowered compared to Example 1, and it can be seen that in Comparative Example 6 in which the compatibilizer is introduced in an excessive amount, there is no additional effect on improving the physical property retention after the heat- and moisture- resistance tests.

## Claims

1. A polybutylene terephthalate resin composition comprising:
(1) 40 to 70 parts by weight of polybutylene terephthalate resin;
(2) 10 to 40 parts by weight of polycyclohexylenedimethylene terephthalate resin;
(3) 12 to 25 parts by weight of a phosphorus-based flame retardant;
(4) 0.1 to 3 parts by weight of a flame retardant supplement; and
(5) 0.1 to 2 parts by weight of a compatibilizer,
based on 100 parts by weight of the total composition.

2. The polybutylene terephthalate resin composition according to claim 1, wherein the polybutylene terephthalate resin has an intrinsic viscosity of 0.7 to 1.5 dl/g.

3. The polybutylene terephthalate resin composition according to claim 1, wherein the polycyclohexylenedimethylene terephthalate resin has a melting point of 280°C or higher and an intrinsic viscosity of 0.6 to 0.9 dl/g.

4. The polycarbonate resin composition according to claim 1, wherein the phosphorus-based flame retardant is a phosphoric acid ester compound represented by the following Formula (1): 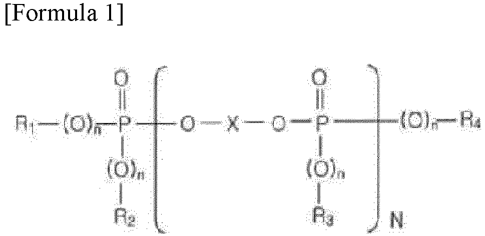 in Formula 1,
each of R₁, R₂, R₃ and R₄ is independently C₁-C₈ alkyl, C₅-C₆ cycloalkyl, C₆-C₂₀ aryl
or C₇-C₂₀ aralkyl;
n is independently 0 or 1,
N is 0 to 10,
X is a C₆-C₃₀ mononuclear aromatic or polynuclear aromatic group.

5. The polybutylene terephthalate resin composition according to claim 1, wherein the flame retardant supplement is at least one compound selected from the group consisting of melamine cyanurate, melamine phosphate, melamine polyphosphate and melamine pyrophosphate.

6. The polybutylene terephthalate resin composition according to claim 1, wherein the compatibilizer is a styrene-glycidyl methacrylate random copolymer.

7. The polybutylene terephthalate resin composition according to claim 1, further comprising at least one additive selected from the group consisting of a releasing agent, a heat stabilizer, an antioxidant, a lubricant, a pigment, a light stabilizer and a black master batch.

8. A molded article prepared from the polybutylene terephthalate resin composition according to any of claims 1 to 7.
